# EUROPEAN PATENT APPLICATION

(11) **EP 3 096 001 A1**
(43) Date of publication of application: **23.11.2016**
(21) Application number: 15460019.1
(22) Date of filing: 18.05.2015
(51) Int. Cl.: F03B 13/06

(54) **PUMPED-STORAGE POWER STATION**

(71) Applicant: Cieszkowski, Henryk, 59-300 Lubin (PL); Milewski, Zygmunt, 59-220 Legnica (PL)
(72) Inventor: Cieszkowski, Henryk, 59-300 Lubin (PL); Milewski, Zygmunt, 59-220 Legnica (PL)

(57) **Abstract**

The present invention provides an improved construction and method for the construction of pumped-storage power plant. Method for construction of plant equipped with containers designed to collect the fluid displaced in a cyclic reversible conversion of electrical energy into potential energy of gravity lies in the fact that the lower tank is being made underground in a batch of rock mass characterized by low water permeability and minimum water tributaries. Power station equipped with containers designed to collect the displaced fluid, has joined together, at least one hydraulically isolated lower tank and at least one hydraulically isolated upper reservoir wherein the fluid displaceable between is an aqueous solution of a salt of highly mineralized preferably water-saturated rock salt.

## Description

Known pumped-storage power stations are usually equipped with two tanks for collecting water displaced in a cyclic reversible conversion of electrical energy to gravitational potential energy, which turn electrical energy into gravitational potential energy by pumping water from the lower to the upper reservoir during the period of surplus over demand electricity production, and then dump the accumulated in this way water , during peak hours, to the lower tank through the turbo pumps, which uses the energy stored in the water , powering generators producing electricity. In conventional pumped-storage power plants only upper tank is insulated hydraulically and water stored in reservoirs has a natural low mineralization. Pumped-storage is the most commonly used electrical energy storage. Despite having many advantages have such an disadvantage that the costs of investment in pumped--storage power plant are huge, they burden the environment, and their construction according to known methods is possible only in very specific conditions.

The aim of the inventions is to increase the storage capacity of the electricity in pumped-storage power stations and thus the efficiency of both existing and newly constructed pumped-storage power stations as well as creating possibilities for their construction in all kinds of terrain where there is a need for storage of electricity, in particular coming from wind or photovoltaic farms, and reduce their negative impact on the environment.

The goal was accomplished with present inventions. Method of construction of pumped-storage power plant according to the present invention, lies in the fact that the bottom tank is carried out underground where it locates in the part of rock characterized by low water permeability and minimal water inflow from the rock mass. The method according to the present invention is suitable for use in all kinds of terrain where there is a need for electrical energy storage, in particular originating from wind farms or photovoltaic systems. The present invention also decreases maintenance costs and reduces the power plant's impact on the environment.

Pumped-storage power station according to the present invention has a lower tank and the upper reservoir hydraulically isolated and in these tanks is collected highly mineralized aqueous solutions, preferably water saturated with rock salt. The present invention increases the storage capacity of pumped--storage power station up to 20%.

Method of construction of pumped-storage power plant according to the present invention is shown in the examples.

In the first embodiment on the ground surface were built two upper tanks, one of them recessed and covered and the second with embankments and also covered. The lower tank was performed underground, as a system of specially made horizontal mine workings located within the part of rock characterized by low water permeability and minimal water inflow from the rock mass, having a capacity of 2 million m3. The tank was located at 500 meters below the ground surface, this tank was connected to the underground chamber where the devices of pumped-storage power plant, i.e. Turbo pumps, generators and transformers, were located. Underground excavations were connected to the surface with the shafts, in which there were assembled, among others, water pipes and electric cables, which were components of the plant.

In the second embodiment, in the seaside, where offshore wind farms were built, occurred the need to store large amounts of electricity. For this purpose, the sea was used as the upper reservoir. The lower tank having a capacity of 2 million m3., was performed underground, using mining methodes, in a granite rock mass, at a depth of 500 meters below sea level. In the vicinity of the tank in a specially made compartment, the units of pumped-storage power plant were built over (esp. turbo pumps, generators and transformers). The sea water was supplied to turbo pumps by pipelines, built in shaft connecting the surface area with the chamber. Power cables supplying and taking off electricity, were built in the second shaft, connecting the surface area with the chamber. The placement of the lower tank and plant devices in the rocks of granite, ensured minimum water tributaries to the lower reservoir. Obtained electricity storage capacity was approximately 2.7 GWh.

In the third embodiment, in the lowland of the country, there is a need for storing excess of electric energy from wind and photovoltaic farms. For this purpose, lake with a capacity of 20 million m3 was used as the upper reservoir, while the lower tank with a capacity of 4 million m3, was made with mining method, in batches granite rock, located at a depth of 250 meters below ground level. In the vicinity of the reservoir in a specially made compartment, the units of pumped-storage (esp. turbo pumps, generators and transformers) were built over. Lake water was brought to the turbo pump with pipelines, builtin in the shaft, connecting the surface area with the chamber. The power cables supplying and taking off electricity, were builtin in the second shaft, connecting surface with the chamber. The placement of the lower tank and plant devices in the rocks of granite, ensured minimum water tributaries to the lower reservoir. Obtained electricity storage capacity was approximately 2.5 GWh.

Pumped-storage power plant according to the present invention is shown in the examples.

In the first embodiment, in an existing pumped-storage power station, in the bottom tank having a much larger capacity than the top tank , a smaller tank with a capacity of upper reservoir was separated by means of embankments, hydraulically isolated from the rest of the existing tank.

So prepared reservoir was included in the system of pumped-storage power plant, leading the water circulation in a closed circuit between the separated tank and the top tank - also hydraulically isolated. To water in an aqueous system of power plant salt was added, maintaining its concentration at the level of the saturated brine. The density of the brine was approximately 1200 kg / m3, i.e. increased by about 20% compared to current density of water. Thanks to it, electricity storage capacity in the existing pumped-storage power plant, increased about 20%. In order to maintain constant amount of the salt in circulating brine, dumping it to a buffer tank in the event of excessive rainfall and adding salt as well as pumping in water or saline from bufor tank into the system in case of prolonged drought, were foreseen.

In a second embodiment, a new pumped-storage power plant was built with closed saline circuit, consisting of the lower and upper reservoirs, with a capacity of 4 million m3 each. The difference in level between the tanks was 250 m. The tanks were surface tanks with sealed hemispheres, not allowing leakage of brine. Brine was a saturated rock salt solution having a density about 1200kg/m3. Ability to store energy, in so made pumped-storage power plant, was approx. 3.2 GWh and is higher by approx. 0.6 GWh of storage capacity of the same power plant, using water instead of brine.

## Claims

1. Method of construction of pumped-storage power station equipped with containers designed to collect the fluid displaced in a cyclic reversible conversion of electrical energy into potential energy of gravity, **characterized in that** the lower tank is formed underground and located in a part of rock mass **characterized by** low water permeability and minimal water inflow from the rock mass.

2. Pumped-storage power station equipped with containers designed to collect the fluid displaced in a cyclic reversible conversion of electrical energy into potential energy of gravity, **characterized in that** it has joined together, at least one hydraulically insulated lower tank and at least one hydraulically insulated upper tank and the fluid moved between the tanks in a cyclic reversible conversion of electrical energy into potential energy of gravity is an aqueous solution of salt high mineralization preferably water saturated with rock salt.
